# EUROPÄISCHE PATENTSCHRIFT

(11) **EP 3 208 100 B1**
(45) Veröffentlichungstag und Bekanntmachung des Hinweises auf die Patenterteilung: **06.05.2020**
(21) Anmeldenummer: 17000207.5
(22) Anmeldetag: 10.02.2017
(51) Int. Cl.: B42D 25/369, G06K 19/06

(54) **SICHERHEITSELEMENT MIT MAGNETCODIERUNG UND DESSEN HERSTELLUNGSVERFAHREN**
SECURITY ELEMENT HAVING MAGNET CODING AND CORRESPONDING MANUFACTURING METHOD
ÉLÉMENT DE SÉCURITÉ À CODAGE MAGNÉTIQUE ET SON PROCÉDÉ DE FABRICATION

(30) Priorität: 17.02.2016 DE 102016001828
(43) Veröffentlichungstag der Anmeldung: 23.08.2017
(73) Patentinhaber: Giesecke+Devrient Currency Technology GmbH, 81677 München (DE)
(72) Erfinder: MESSA, Gianluca, 83684 Tegernsee (DE)
(74) Vertreter: Zeuner, Stefan

(56) Entgegenhaltungen:
- EP-A1- 2 385 503
- WO-A1-2009/090676
- WO-A1-2012/000568
- DE-A1-102007 025 939
- FR-A1- 2 767 218
- GB-A- 2 478 537

## Beschreibung

Die Erfindung betrifft ein Sicherheitselement zur Absicherung von Sicherheitspapieren, Wertdokumenten und anderen Datenträgern, mit einer Magnetcodierung aus einer Mehrzahl von Magnetbereichen, die entlang einer Längsrichtung beabstandet angeordnet sind, und bei der die Abfolge von Magnetbereichen und zwischen den Magnetbereichen liegenden Zwischenräumen eine Codierung bildet. Die Erfindung betrifft auch ein Verfahren zum Herstellen eines solchen Sicherheitselements.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente sind beispielsweise in Form eines in eine Banknote ganz oder teilweise eingebetteten Sicherheitsfadens ausgebildet.

Um eine automatische Echtheitsprüfung und gegebenenfalls eine weitergehende sensorische Erfassung und Bearbeitung der damit versehenen Dokumente zu ermöglichen, sind die Sicherheitselemente oft mit maschinenlesbaren Codierungen versehen. Ein Beispiel für ein maschinenlesbares Sicherheitselement für Banknoten ist ein Sicherheitsfaden mit maschinenlesbaren magnetischen Bereichen, deren Informationsgehalt bei der Echtheitsprüfung von dem Magnetsensor eines Banknotenbearbeitungssystems erfasst und ausgewertet werden kann.

In bekannten Gestaltungen ist die in der maschinenlesbaren Codierung ablegbare Informationsmenge aber entweder sehr begrenzt, oder es werden zur Steigerung der Informationsmenge komplex gestaltete Magnetbereiche eingesetzt, deren Herstellung einen hohen Aufwand erfordert.

Beispiele von konventionellen Sicherheitselementen mit Magnetkodierungen sind, zum Beispiel, in FR2767218-A1, GB2478537-A und WO2009/090676-A1 offenbart.

Davon ausgehend liegt der Erfindung die Aufgabe zugrunde, ein gattungsgemäßes Sicherheitselement anzugeben, das die Nachteile des Stands der Technik vermeidet oder vermindert. Insbesondere soll die Magnetcodierung eine große Informationsmenge codieren können, dabei aber einfach, kostengünstig und zuverlässig herstellbar sein.

Diese Aufgabe wird durch die Merkmale der unabhängigen Ansprüche gelöst. Weiterbildungen der Erfindung sind Gegenstand der Unteransprüche.

Gemäß der Erfindung ist bei einem gattungsgemäßen Sicherheitselement vorgesehen, dass die Magnetbereiche durch ein in gleicher Dicke aufgebrachtes magnetisches Material gebildet sind, die Magnetbereiche aber in einer zur Längsrichtung senkrechten Querrichtung unterschiedliche Mengen an magnetischem Material aufweisen, so dass die Abfolge von Magnetbereichen und Zwischenräumen eine erste Codierung der Magnetcodierung bildet, und die Abfolge von Magnetbereichen unterschiedlicher Materialmenge eine zweite Codierung der Magnetcodierung bildet.

Die Magnetbereiche sind entlang einer Richtung beabstandet angeordnet, welche im Rahmen dieser Beschreibung als Längsrichtung bezeichnet wird. Die dazu senkrechte Richtung in der Ebene des Sicherheitselements wird als Querrichtung bezeichnet. Die Dicke des magnetischen Materials der Magnetbereiche wird senkrecht zum Sicherheitselement, also senkrecht zur Längs- und Querrichtung gemessen. Der Begriff Zwischenräume bezeichnet die in Längsrichtung zwischen den Magnetbereichen liegenden Zwischenbereiche. Da die Längsrichtung durch die Richtung der beabstandeten Anordnung der Magnetbereiche definiert ist, muss sie nicht zwangsläufig mit der langen Seite eines langgestreckten Sicherheitselements zusammenfallen, auf dem die Magnetcodierung aufgebracht ist. In vorteilhaften Gestaltungen fällt allerdings die Längsrichtung der Magnetcodierung mit der Richtung der längsten Ausdehnung des Sicherheitselements, beispielsweise der Längsachse eines Sicherheitsfadens zusammen.

Da die Magnetbereiche alle durch ein in gleicher Dicke aufgebrachtes magnetisches Material gebildet sind, werden für die Herstellung der Magnetbereiche weder unterschiedliche Druckzylinder für unterschiedliche Druckstärken noch ein komplexer Druckzylinder mit unterschiedlichen Druckstärkecharakteristiken benötigt, so dass die Magnetbereiche einfach, kostengünstig und zuverlässig auf dem Sicherheitselement vorgesehen werden können. Eine zusätzliche Speichermöglichkeit für Information in Form einer zweiten Codierung wird dann dadurch geschaffen, dass die Magnetbereiche in einer zur Längsrichtung senkrechten Querrichtung mit unterschiedlichen Mengen an magnetischem Material erzeugt werden. Die unterschiedlichen Mengen an magnetischem Material führen beim Auslesen der Magnetcodierung zu unterschiedlichen großen Signalstärken im Messsignal eines Magnetsensors, so dass aus der Abfolge unterschiedlich großer Signale auf die Abfolge der Magnetbereiche unterschiedlicher Materialmenge geschlossen und damit die zweite Codierung ausgelesen werden kann.

Mit besonderem Vorteil weisen die Magnetbereiche in Querrichtung drei, vier oder fünf unterschiedlich große Materialmengen auf, auch wenn andere Anzahlen wie zwei oder sechs oder mehr unterschiedlich große Materialmengen grundsätzlich ebenfalls möglich sind. Mit drei unterschiedlich großen Materialmengen kann ein ternärer Code aus einer Anzahl von Trits (trinary digit) verwirklicht werden, bei dem eine geringe Materialmenge beispielsweise das Trit 0 oder L(ow) codiert, eine große Materialmenge das Trit 2 oder H(igh) und eine mittelgroße Materialmenge das Trit 1 oder M(edium). Mit vier oder fünf unterschiedlich großen Materialmengen kann entsprechend ein Code auf 4er- oder 5er-Basis verwirklicht werden.

In einer vorteilhaften Variante werden die unterschiedlich großen Materialmengen dadurch verwirklicht, dass die Magnetbereiche in Querrichtung unterschiedlich große Abmessungen aufweisen. Alternativ oder zusätzlich können die Magnetbereiche in Querrichtung auch eine unterschiedlich starke Rasterung aufweisen, beispielsweise durch eine Abfolge paralleler, beabstandeter Magnetbahnen. In Längsrichtung betragen die Abmessungen der Magnetbereiche und die Abmessungen der zwischen den Magnetbereichen liegenden Zwischenräume mit Vorteil stets ein ganzzahliges Vielfaches einer Grundlänge ℓ, wobei die Grundlänge ℓ bevorzugt zwischen 1 mm und 6 mm liegt. Dadurch ist sichergestellt, dass die Magnetbereiche und Zwischenräume eindeutig einer Folge von einem oder mehreren Bits zugeordnet werden können.

In einer vorteilhaften Weiterbildung der Erfindung sind die Magnetbereiche durch magnetisches Material mit unterschiedlichen magnetischen Eigenschaften gebildet, wobei die Abfolge von Magnetbereichen unterschiedlicher Magneteigenschaften eine dritte Codierung der Magnetcodierung bildet. Insbesondere können die Magnetbereiche dabei durch magnetisches Material mit unterschiedlich großer Koerzitivfeldstärke gebildet sein.

Weiter ist mit Vorteil vorgesehen, dass die Magnetbereiche maximaler Abmessung in Querrichtung die gesamte Breite des Sicherheitselements, insbesondere eines Sicherheitsfadens, einnehmen. Die anderen Magnetbereiche weisen dann in einer vorteilhaften Gestaltung eine geringere Breite auf. Es ist allerdings auch möglich, dass alle Magnetbereiche die gesamte Breite einnehmen und sich beispielsweise durch die Rasterung unterscheiden.

Die Abmessung der Magnetbereiche in Längsrichtung liegt mit Vorteil zwischen 1 mm und 6 mm, und die Abmessung der Magnetbereiche in Querrichtung liegt zweckmäßig zwischen 1 mm und 6 mm oder der Breite des Sicherheitselements.

Die Erfindung enthält auch ein Verfahren zum Herstellen eines Sicherheitselements mit einer Magnetcodierung, bei dem auf einem Träger
- entlang einer Längsrichtung in gleicher Dicke magnetisches Material aufgebracht wird, um eine Mehrzahl entlang einer Längsrichtung beabstandeter Magnetbereiche auszubilden, wobei die Abfolge von Magnetbereichen und zwischen den Magnetbereichen liegenden Zwischenräumen eine erste Codierung der Magnetcodierung bildet, und
- die Magnetbereiche in einer zur Längsrichtung senkrechten Querrichtung mit unterschiedlichen Mengen an magnetischem Material aufgebracht werden, wobei die Abfolge von Magnetbereichen unterschiedlicher Materialmenge eine zweite Codierung der Magnetcodierung bildet.

Die Magnetbereiche können alle durch dasselbe magnetische Material gebildet werden, es können jedoch auch Magnetbereiche aus magnetischem Material mit unterschiedlichen magnetischen Eigenschaften ausgebildet werden, um durch die Abfolge von Magnetbereichen unterschiedlicher Magneteigenschaften eine dritte Codierung der Magnetcodierung zu bilden. Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: in schematischer Darstellung eine Banknote mit einem erfindungsgemäßen Sicherheitsfaden mit Magnetcodierung, sowie zwei Magnetsensoren für unterschiedliche Ausleserichtungen,
- Fig. 2: schematisch den Aufbau des Sicherheitsfadens der Fig. 1 und die prinzipielle Funktionsweise beim Auslesen des Sicherheitsfadens, wobei (a) einen schematischen Querschnitt des Sicherheitsfadens, (b) eine Aufsicht auf den Sicherheitsfaden und (c) schematisch das von einem Magnetsensor in Längsrichtung ortsabhängig erfasste Sensorsignal zeigt,
- Fig. 3: in (a) bis (c) eine Darstellung wie in Fig. 2 für eine andere Magnetcodierung,
- Fig. 4: eine alternative Gestaltung eines Sicherheitsfadens mit Magnetbereichen gleicher Abmessung in Querrichtung, aber unterschiedlicher Rasterung,
- Fig. 5: eine Magnetcodierung, bei der Material mit unterschiedlichen magnetischen Eigenschaften einsetzt wird, wobei (a) einen schematischen Querschnitt des Sicherheitsfadens, (b) eine Aufsicht auf den Sicherheitsfaden und (c) und (d) Messsignale in unterschiedlichen Messkanälen zeigt, und
- Fig. 6: in (a) schematisch einen Auslesevorgang eines Sicherheitsfadens bei einem Transport in Querrichtung und in (b) ein Messsignal eines nicht ortsauflösenden Magnetsensors bei einem solchen Auslesevorgang.

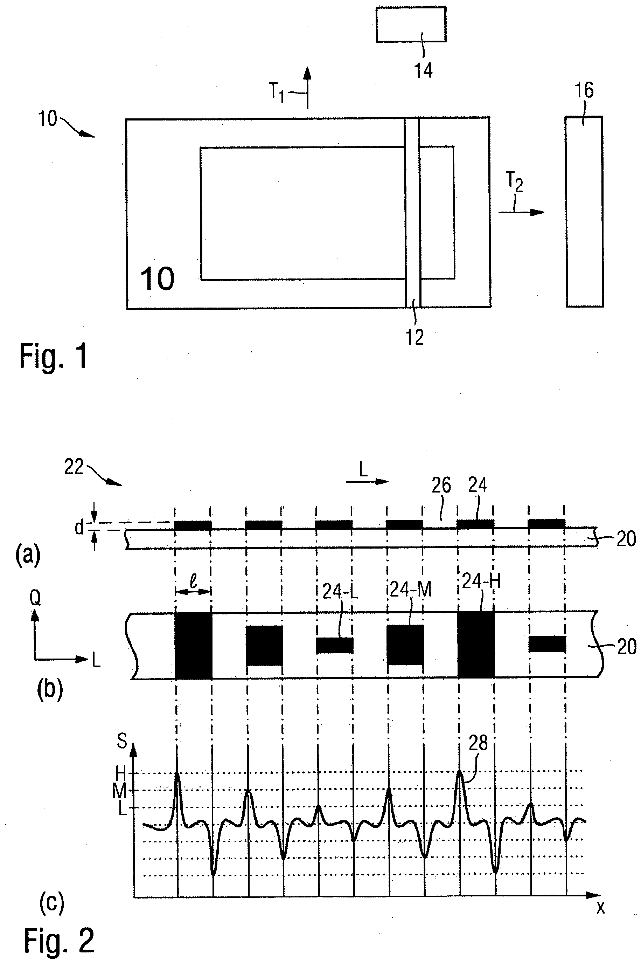

Die Erfindung wird nun am Beispiel von Sicherheitsfäden für Banknoten erläutert. Fig. 1 zeigt dazu eine schematische Darstellung einer Banknote 10, die mit einem erfindungsgemäßen Sicherheitsfaden 12 mit Magnetcodierung versehen ist. Der Sicherheitsfaden 12 kann dabei auf der Oberseite der Banknote 10 aufgebracht oder teilweise oder vollständig in die Banknote eingebettet sein. Es versteht sich allerdings, dass die Erfindung nicht auf Sicherheitsfäden und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben Sicherheitsfäden beispielsweise auch breite Sicherheitsstreifen oder Transferelemente in Betracht.

Mit Bezug auf die Darstellung der Fig. 1 wird die Banknote 10 zur Echtheitsprüfung beispielsweise von einem nicht gezeigten Transportsystem in Transportrichtung T₁ an einem Magnetsensor 14 vorbeigeführt, so dass der Sicherheitsfaden 12 von dem Magnetsensor 14 entlang seiner Längsachse ausgelesen werden kann. In anderen Gestaltungen findet die Echtheitsprüfung bei einem Transport in Transportrichtung T₂ statt, wo der Sicherheitsfaden von einem Magnetsensor 16 entlang seiner Querachse ausgelesen werden kann, wie weiter unten genauer erläutert.

Der Aufbau des Sicherheitsfadens 12 und die prinzipielle Funktionsweise beim Auslesen der Magnetcodierung des Sicherheitsfadens 12 werden nun mit Bezug auf Fig. 2 näher erläutert, wobei Fig. 2(a) einen schematischen Querschnitt des Fadens 12, Fig. 2(b) eine Aufsicht auf den Faden 12 und Fig. 2(c) schematisch das von dem Magnetsensor 14 in Abhängigkeit vom Ort x erfasste Sensorsignal zeigt.

Mit Bezug auf Fig. 2(a) und 2(b) weist der Sicherheitsfaden 12 einen Träger 20 in Form einer transparenten Kunststofffolie, beispielsweise einer PET-Folie auf. Auf dem Träger 20 ist eine Magnetcodierung 22 angeordnet, die aus einer Mehrzahl von Magnetbereichen 24 gebildet ist, welche entlang einer Längsrichtung L, die mit der Längsachse des Sicherheitsfadens 12 beabstandet angeordnet sind. Die Abfolge der Magnetbereiche 24 und der Zwischenräume 26 zwischen den Magnetbereichen 24 bildet dabei eine erste Codierung der Magnetcodierung 22. Im Ausführungsbeispiel ist die erste Codierung eine binäre Codierung, dargestellt durch die Bits 1 (Magnetbereich 24) und 0 (Zwischenraum 26), so dass die alternierende Darstellung der Fig. 2(a) die Bitfolge 10101010101 bildet.

Wie am besten im Querschnitt der Fig. 2(a) zu erkennen, sind die Magnetbereiche 24 alle durch ein in gleicher Dicke d aufgebrachtes magnetisches Material gebildet. Es versteht sich, dass der Sicherheitsfaden 12 neben der gezeigten Magnetcodierung 22 typischerweise weitere Schichten aufweisen wird, beispielsweise Schutzschichten, Funktionsschichten mit weiteren Sicherheitsmerkmalen, oder auch Tarnschichten zum visuellen Verbergen der Magnetcodierung. Diese weiteren Schichten sind für die vorliegende Erfindung jedoch nicht wesentlich und werden daher nicht weiter gezeigt oder beschrieben.

Mit Bezug auf Fig. 2(b) weisen die Magnetbereiche 24 in Längsrichtung L Abmessungen auf, die stets ein ganzzahliges Vielfaches einer Grundlänge ℓ sind, wobei t typischerweise zwischen 1 mm und 6 mm, im Ausführungsbeispiel etwa bei 2 mm liegt. Jeder Magnetbereich 24 stellt dann eindeutig eine Folge von einem oder mehreren Bits 1 dar. Im Ausführungsbeispiel der Fig. 2 weisen die Magnetbereiche 24 jeweils eine Längsabmessung 1^{∗}ℓ auf, stellen also jeweils ein einzelnes Bit 1 dar, wie in der oben genannten Bitfolge angegeben. Gleichermaßen sind die Abstände benachbarter Magnetbereiche 24 sind stets ein ganzzahliges Vielfaches der Grundlänge ℓ, so dass jeder Zwischenraum 26 eindeutig eine Folge von einem oder mehreren Bits 0 darstellt. Im Ausführungsbeispiel der Fig. 2 weisen die Zwischenräume 26 jeweils eine Längsabmessung 1^{∗}ℓ auf, stellen also jeweils ein einzelnes Bit 0 dar, wie in der oben genannten Bitfolge angegeben.

Die Magnetcodierung 22 enthält nun neben der beschriebenen ersten Codierung noch eine weitere, zweite Codierung, die mit Bezug auf Fig. 2(b) dadurch gebildet ist, dass die Magnetbereiche 24 in Querrichtung Q drei verschieden große Abmessungen aufweisen. In Querrichtung liegt dann entsprechend jeweils eine von drei möglichen, verschieden großen Mengen an magnetischem Material vor. Eine erste Gruppe von Magnetbereichen 24-H erstreckt sich über die gesamte Breite des Sicherheitsfadens 12, eine zweite Gruppe von Magnetbereichen 24-L weist eine nur sehr geringe Abmessung in Querrichtung auf und eine dritte Gruppe von Magnetbereichen 24-M weist eine mittelgroße Abmessung in Querrichtung auf.

Durch die unterschiedlich große Materialmenge ergibt sich beim Auslesen des Sicherheitsfadens 12 in Längsrichtung L auch eine unterschiedlich große Signalstärke S des Magnetsensors 14, wie in der Messkurve 28 der Fig. 2(c) schematisch dargestellt. Die breiten Magnetbereiche 24-H erzeugen ein großes Signal (H), die schmalen Magnetbereiche 24-L erzeugen ein kleines Signal (L) und die mittelbreiten Magnetbereiche 24-M ein mittelgroßes Signal (M). Um eine gute Trennbarkeit der verschiedenen Signalstärken sicherzustellen, werden die Breiten der Magnetbereiche 24-H, 24-M, 24-L vorteilhaft ausgehend von dem breitesten Magnetbereich 24-H so aufeinander abgestimmt, dass die Verhältnisse der Signalstärken H/M und M/L einen bestimmten Schwellwert, beispielsweise 1,25 oder 1,5, erreichen oder überschreiten.

Die Abfolge der unterschiedlich breiten Magnetbereiche 24 bildet so eine zweite Codierung, im Ausführungsbeispiel eine ternäre Codierung, dargestellt durch die Trits (trinary digit) H (Magnetbereich 24-H), M (Magnetbereich 24-M) und L (Magnetbereich 24-L), so dass die in Fig. 2(b) gezeigte Abfolge beispielsweise die Tritfolge HMLMHL darstellt.

Die Magnetcodierung 22 des Sicherheitsfadens 12 enthält daher gleichzeitig zwei Codierungen und kann daher eine größere Informationsmenge speichern als mit einer einzigen Codierung möglich wäre. Konkret kann die erste Codierung aus der Abfolge von Magnetbereichen 24 und Zwischenräumen 26 beispielsweise das Ausgabeland und die Wertzahl der Banknote 10 angeben, während die zweite Codierung mit der Abfolge von unterschiedlich breiten Magnetbereichen 24-H, 24-M, 24-L das Herstellungsjahr des Sicherheitsfadens 12 oder eine andere fadenspezifische Information angibt.

Bei einer Breite des Sicherheitsfadens 12 von beispielsweise 6 mm können die breiten Magnetbereiche 24-H eine Breite von 6 mm aufweisen, also die gesamte Fadenbreite einnehmen, die mittelbreiten Magnetbereiche 24-M können eine Breite von 4 mm und die schmalen Magnetbereiche 24-L eine Breite von 2 mm aufweisen. Da die Signalstärke des Magnetsensors 14 im Wesentlichen proportional zur magnetischen Kantenlänge eines Magnetbereichs 24 ist, erzeugen die Magnetbereiche 24-H, 24-M, 24-L bei diesen Abmessungen Signalstärken H:M:L im Verhältnis 3:2:1, wie in Fig. 2(c) illustriert.

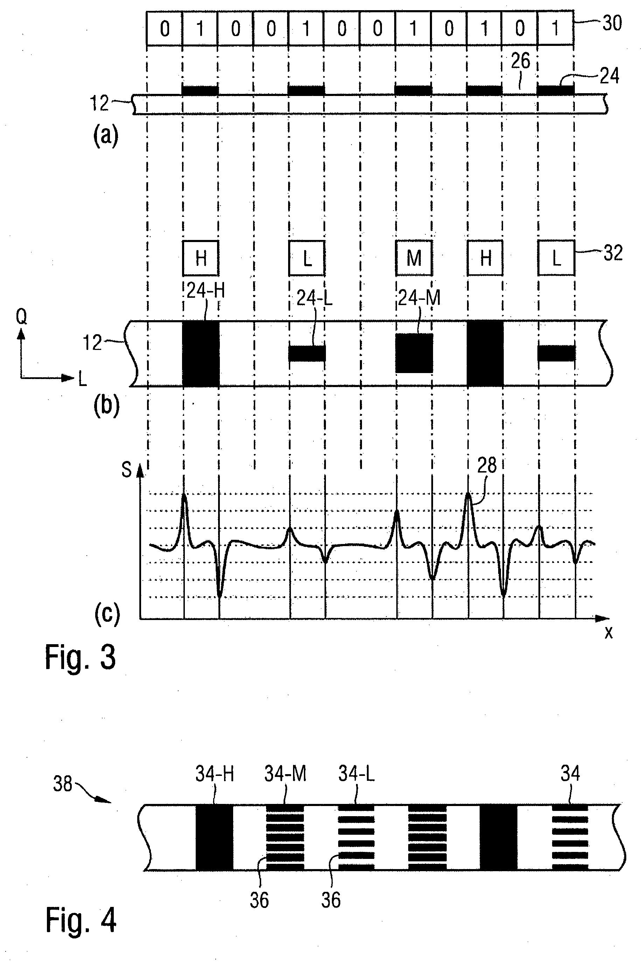

Fig. 3 veranschaulicht den beschriebenen Sachverhalt nochmals anhand einer anderen Magnetcodierung. Mit Bezug auf den Querschnitt eines Sicherheitsfadens 12 in Fig. 3(a) beträgt die Abmessung der Magnetbereiche 24 und der Zwischenräume 26 auch hier in Längsrichtung jeweils ein ganzahliges Vielfaches einer Grundlänge ℓ, wobei der zweite und dritte Zwischenraum 26 beispielsweise jeweils eine Länge 2ℓ aufweist und damit zwei aufeinanderfolgende Bits 0 codiert. Wie in Fig. 3(a) gezeigt, stellt die Abfolge der Magnetbereiche 24 und der Zwischenräume 26 als erste Codierung 30 die Bitfolge 010010010101 dar. Diese erste, binäre Codierung 30 kann beispielsweise das Ausgabeland und die Wertzahl einer Banknote codieren, insbesondere also Angaben, die für alle gleichartigen Banknoten identisch sind.

In Querrichtung weisen die Magnetbereiche 24-H, 24-M und 24-L unterschiedliche Abmessungen auf, wie in Fig. 3(b) gezeigt, die zu unterschiedlichen Signalstärken im vom Magnetsensor 14 erfassten Messsignal 28 führt (Fig. 3(c)). Durch die unterschiedliche Menge an magnetischem Material in den Magnetbereichen 24 ist auf diese Weise eine zweite, ternäre Codierung 32 gebildet, die im Ausführungsbeispiel die Tritfolge HLMHL darstellt. Die Codierung 32 kann beispielsweise das Herstellungsjahr des Sicherheitsfadens 12 angeben und damit insbesondere eine für den Sicherheitsfaden spezifische Angabe enthalten.

Fig. 4 zeigt eine alternative Gestaltung eines Sicherheitsfadens 38, bei der die Magnetbereiche 34 der Magnetcodierung nicht nur dieselbe Länge und Dicke, sondern auch dieselbe Breite aufweisen und beispielsweise alle jeweils die gesamte Breite des Sicherheitsfadens 38 einnehmen. Die Magnetbereiche 24 unterscheiden sich allerdings in der Rasterung in Querrichtung und weisen daher trotz der gleichen Breite eine unterschiedliche große Menge an magnetischem Material in Querrichtung auf.

Während die Magnetbereiche 34-H vollflächig sind (keine Rasterung), bestehen die Magnetbereiche 34-M und 34-L jeweils aus einer Mehrzahl paralleler, sich in Längsrichtung L erstreckender Magnetbahnen 36. Dabei beträgt das Tastverhältnis von Magnetbahnen 36 und dazwischen liegenden Leerbahnen bei den Magnetbereichen 34-M noch 2:1, bei den Magnetbereichen 34-L dagegen nur 1:2. Die Magnetbereiche 34-M und 34-L enthalten daher nur 2/3 bzw. 1/3 der Materialmenge der Magnetbereiche 34-H und auch die magnetische Kantenlänge der Magnetbereiche 34-M und 34-L beträgt nur 2/3 bzw. 1/3 der magnetischen Kantenlänge der Magnetbereiche 34-H. Beim Auslesen des Sicherheitsfaden-Abschnitts der Fig. 4 in Längsrichtung erzeugen die Magnetbereiche 34 daher dasselbe Signal 28 wie die Magnetbereiche 24 des Sicherheitsfaden-Abschnitts der Fig. 2(b) und bilden daher ebenfalls eine zweite Codierung mit der Tritfolge HMLMHL.

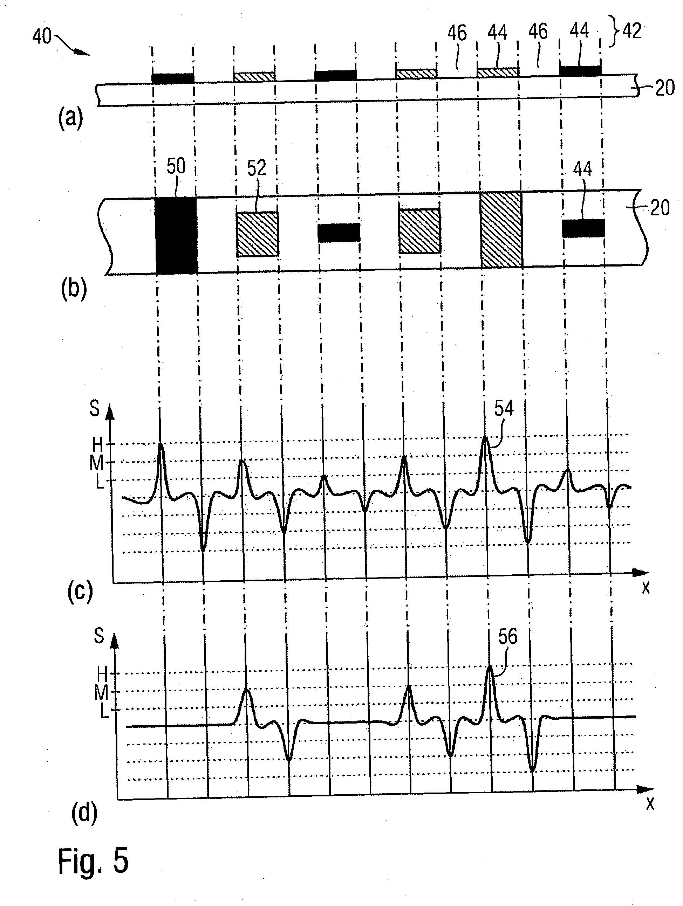

Durch die Verwendung von magnetischem Material mit unterschiedlichen magnetischen Eigenschaften kann noch eine weitere Codierung in der Magnetcodierung unterbracht werden. Fig. 5 zeigt hierzu in einer Darstellung wie in Fig. 2 einen Sicherheitsfaden 40 mit einer Magnetcodierung 42, bei der die Magnetbereiche 44 nicht verschieden große Abmessungen in Querrichtung Q haben, sondern zusätzlich durch magnetisches Material mit zwei unterschiedlich großen Koerzitivfeldstärken gebildet sind. Jeder Magnetbereich 44 ist entweder durch ein Material niedriger Koerzitivfeldstärke (Magnetbereiche 50, in Fig. 5 gefüllt dargestellt) oder ein Material hoher Koerzitivfeldstärke (Magnetfeldbereiche 52, in Fig. 5 schraffiert dargestellt) gebildet.

Die Abfolge von Magnetbereichen hoher Koerzitivfeldstärke und Magnetbereichen niedriger Koerzitivfeldstärke stellt dann eine dritte Codierung in der Magnetcodierung 42 dar. Daneben enthält die Magnetcodierung 42 natürlich auch noch die erste Codierung, die durch die Abfolge der Zwischenräume 46 und der Magnetbereiche 44 an sich, unabhängig von deren Breite und Koerzitivfeldstärke, gegeben ist (Fig. 5(a)), sowie die zweite Codierung, die durch die Abfolge unterschiedlich breiter Magnetbereiche gegeben ist (Fig. 5(b)), wie oben im Zusammenhang mit Fig. 2 ausführlich erläutert.

Die unterschiedlichen Koerzitivfeldstärken der Magnetbereiche 44 können in unterschiedlichen Lesekanälen eines Magnetsensors 14 separat oder gemeinsam ausgelesen werden, wie in Fig. 5(c) und 5(d) gezeigt. Bei der Messung der Fig. 5(c) enthält das Messsignal 54 sowohl Beträge von den hochkoerzitiven Magnetbereichen 52 als auch Beträge von den niedrigkoerzitiven Magnetbereichen 50, so dass aus dem Messsignal 54 die erste und zweite Codierung abgeleitet werden kann, wie oben bereits beschrieben.

In einem anderen Lesekanal können auch nur die hochkoerzitiven Magnetbereiche 52 erfasst werden, so dass das Messsignal 56 in diesem Kanal nur Beiträge von den hochkoerzitiven Magnetbereichen 52, nicht aber den niedrigkoerzitiven Magnetbereichen 50 enthält, wie in Fig. 5(d) gezeigt. Auch bei dieser Messung ist die Signalstärke im Wesentlichen proportional zur magnetischen Kantenlänge der Magnetbereiche 52, so dass jeder hochkoerzitive Magnetbereich 52 ein Trit (mit Wert H, M oder L) zur dritten Codierung beisteuert. Im Ausführungsbeispiel enthält etwa der gemeinsame Lesekanal die Tritfolge HMLMHL (Fig. 5(c)) und der hochkoerzitive Lesekanal die Tritfolge MMH (Fig. 5(d)).

Werden mit einem Magnetsensor 14 beide Lesekanäle erfasst, so können aus den beiden Messsignalen 54, 56 auch andere Codierungen abgeleitet werden, beispielsweise eine Bitfolge, die die Abfolge von niedrig- und hochkoerzitiven Magnetbereichen 50, 52 angibt. Im Ausführungsbeispiel Fig. 5 ist etwa die Bitfolge nhnhhn mit n= niedrigkoerzitiv und h= hochkoerzitiv gezeigt. Wird diese binäre Bitfolge als dritte Codierung verwendet, kann völlig unabhängig von der ersten und zweiten Codierung eine weitere Information in der Magnetcodierung 40 abgelegt sein.

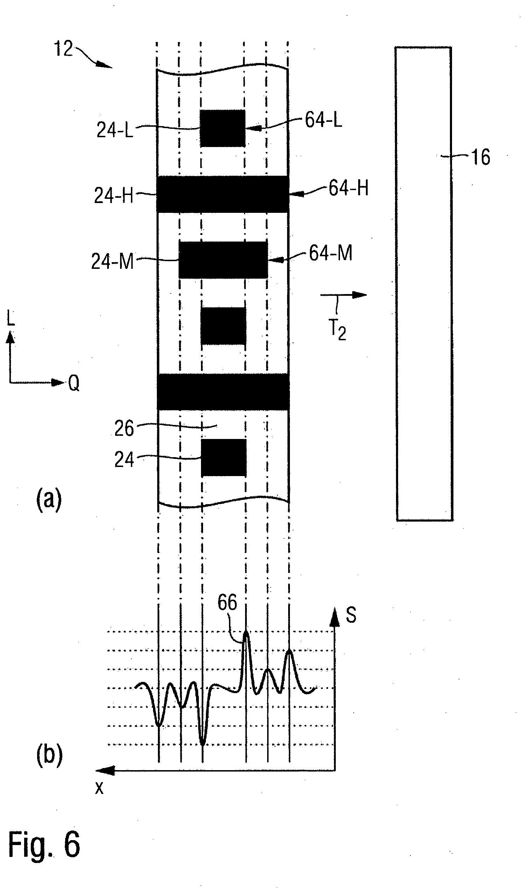

Während die Magnetcodierung 22 bei den bisher beschriebenen Gestaltungen entlang der Längsrichtung L der Magnetcodierung (Transportrichtung T₁ in Fig. 1) ausgelesen wurde, kann die Magnetcodierung 22 auch bei Transport des Sicherheitsfadens 12 entlang der Querrichtung Q (Transportrichtung T₂ in Fig. 1 und 6(a)) ausgelesen werden.

Mit Bezug auf Fig. 6(a) ist der Magnetsensor 16 in einer ersten Auslesevariante dazu ortsauflösend ausgebildet und weist in der Längsrichtung L beispielsweise eine Ortsauflösung von 1 mm auf. Bei einer Grundlänge ℓ zwischen 1 mm und 6 mm können dann die Positionen der Magnetbereiche 24 und der Zwischenräume 26 ohne weiteres erfasst werden, so dass die durch die Abfolge der Magnetbereiche 24 und der Zwischenräume 26 gegebene erste Codierung auch bei Querrichtungstransport ausgelesen werden kann.

Eine Unterscheidung zwischen den unterschiedliche breiten Magnetbereichen 24-H, 24-M, 24-L erfolgt beim Auslesen in Transportrichtung T₂ allerdings nicht über die Signalstärke, sondern über den Zeitpunkt, zu dem an einer bestimmten Fadenlängsposition ein magnetisches Signal erfasst wird, bzw. über die daraus abgeleitete Position der Randkanten 64-H, 64-M, 64-L der Magnetbereiche 24. Aus der Einstufung der Magnetbereiche als schmal (Randkante 64-L wurde erfasst), mittelbreit (Randkante 64-M wurde erfasst) oder breit (Randkante 64-H wurde erfasst) kann dann die zweite Codierung abgeleitet und somit die Magnetcodierung 22 insgesamt ausgelesen werden.

Selbst mit einem nicht ortsauflösenden Magnetsensor 16 kann in Transportrichtung T₂ eine Codierung aus der Magnetcodierung 22 abgeleitet werden. Das in Fig. 6(b) gezeigte Messsignal 66 ist in diesem Fall proportional zur Anzahl der Magnetbereiche 24, die an einer bestimmten Position in Querrichtung Q beginnen oder enden. Beispielsweise beginnen am linken Rand des Sicherheitsfadens 22 mit den Randkanten 64-H zwei breite Magnetbereiche 24-H, etwas weiter im Fadeninneren beginnt mit Randkante 64-M ein mittelbreiter Magnetbereich 24-M, und am nächsten zur Fadenmitte beginnen mit den Randkanten 64-L drei schmale Magnetbereiche 24-L. Das Messsignal 66 zeigt daher drei Peaks mit relativer Amplitude 2:1:3, wobei dieses gemessene Amplitudenverhältnis ein Charakteristikum der Magnetcodierung 22 darstellt. Nach Überschreiten der Fadenmitte treten die Peaks des Messsignals 66 nochmals in umgekehrter Reihenfolge und mit negativem Vorzeichen auf.

### Bezugszeichenliste

- 10: Banknote
- 12: Sicherheitsfaden
- 14: Magnetsensor
- 16: Magnetsensor
- 20: Träger
- 22: Magnetcodierung
- 24: Magnetbereiche
- 24-H, 24-M, 24-L: Magnetbereiche
- 26: Zwischenräume
- 28: Messkurve
- 30: erste, binäre Codierung
- 32: zweite, ternäre Codierung
- 34: Magnetbereiche
- 34-H, 34-M, 34-L: Magnetbereiche
- 36: Magnetbahnen
- 38: Sicherheitsfaden
- 40: Sicherheitsfaden
- 42: Magnetcodierung
- 44: Magnetbereiche
- 46: Zwischenräume
- 50: niedrigkoerzitive Magnetbereiche
- 52: hochkoerzitive Magnetbereiche
- 54, 56: Messsignale
- 64-H, 64-M, 64-L: Magnetbereiche
- 66: Messsignal
- T₁, T₂: Transportrichtungen
- L: Längsrichtung
- Q: Querrichtung

## Patentansprüche

1. Sicherheitselement (12) zur Absicherung von Sicherheitspapieren, Wertdokumenten und anderen Datenträgern, mit einer Magnetcodierung (22) aus einer Mehrzahl von Magnetbereichen (24), die entlang einer Längsrichtung (L) beabstandet angeordnet sind, wobei die Abfolge von Magnetbereichen (24) und zwischen den Magnetbereichen liegenden Zwischenräumen (26) eine erste Codierung (30) der Magnetcodierung bildet, **dadurch gekennzeichnet, dass** die Magnetbereiche (24) durch ein in gleicher Dicke (d) aufgebrachtes magnetisches Material gebildet sind, die Magnetbereiche (24) aber in einer zur Längsrichtung senkrechten Querrichtung (Q) unterschiedliche Mengen an magnetischem Material aufweisen, wobei die Abfolge von Magnetbereichen unterschiedlicher Materialmenge (24-H, 24-M, 24-L) eine zweite Codierung der Magnetcodierung (22) bildet.

2. Sicherheitselement nach Anspruch 1, **dadurch gekennzeichnet, dass** die Magnetbereiche (24) in Querrichtung (Q) drei, vier oder fünf unterschiedlich große Materialmengen aufweisen.

3. Sicherheitselement nach Anspruch 1 oder 2, **dadurch gekennzeichnet, dass** die Magnetbereiche (24) in Querrichtung (Q) unterschiedliche Abmessung aufweisen.

4. Sicherheitselement nach wenigstens einem der Ansprüche 1 bis 3, **dadurch gekennzeichnet, dass** die Magnetbereiche (24) in Querrichtung (Q) eine unterschiedlich starke Rasterung aufweisen.

5. Sicherheitselement nach wenigstens einem der Ansprüche 1 bis 4, **dadurch gekennzeichnet, dass** die Abmessungen der Magnetbereiche (24) in Längsrichtung (L) und die Abmessungen der in Längsrichtung zwischen den Magnetbereichen liegenden Zwischenräumen (26) stets ein ganzzahliges Vielfaches einer Grundlänge ℓ betragen.

6. Sicherheitselement nach wenigstens einem der Ansprüche 1 bis 5, **dadurch gekennzeichnet, dass** die Magnetbereiche (24) durch magnetisches Material mit unterschiedlichen magnetischen Eigenschaften gebildet sind, wobei die Abfolge von Magnetbereichen (24) unterschiedlicher Magneteigenschaften eine dritte Codierung der Magnetcodierung (22) bildet.

7. Sicherheitselement nach Anspruch 6, **dadurch gekennzeichnet, dass** die Magnetbereiche (24) durch magnetisches Material mit unterschiedlicher Koerzitivfeldstärke gebildet sind.

8. Sicherheitselement nach wenigstens einem der Ansprüche 1 bis 7, **dadurch gekennzeichnet, dass** die Magnetbereiche (24) maximaler Abmessung in Querrichtung (Q) die gesamte Breite des Sicherheitselements (12), insbesondere eines Sicherheitsfadens, einnehmen.

9. Sicherheitselement nach wenigstens einem der Ansprüche 1 bis 8, **dadurch gekennzeichnet, dass** die Abmessung der Magnetbereiche (24) in Längsrichtung (L) zwischen 1 mm und 6 mm liegt, und/oder die Abmessung der Magnetbereiche (24) in Querrichtung (Q) zwischen 1 mm und 6 mm oder der Breite des Sicherheitselements liegt.

10. Sicherheitselement nach wenigstens einem der Ansprüche 1 bis 9, **dadurch gekennzeichnet, dass** das Sicherheitselement (12) ein Sicherheitsfaden, ein Sicherheitsband oder ein Sicherheitsstreifen ist.

11. Verfahren zum Herstellen eines Sicherheitselements (12) mit einer Magnetcodierung (22), bei dem auf einem Träger (20)
- entlang einer Längsrichtung (L) in gleicher Dicke (d) magnetisches Material aufgebracht wird, um eine Mehrzahl entlang einer Längsrichtung (L) beabstandeter Magnetbereiche (24) auszubilden, wobei die Abfolge von Magnetbereichen (24) und zwischen den Magnetbereichen liegenden Zwischenräumen (26) eine erste Codierung (30) der Magnetcodierung (22) bildet,
**dadurch gekennzeichnet, dass**
- die Magnetbereiche (24) in einer zur Längsrichtung senkrechten Querrichtung (Q) mit unterschiedlichen Mengen an magnetischem Material aufgebracht werden, wobei die Abfolge von Magnetbereichen unterschiedlicher Materialmenge (24-H, 24-M, 24-L) eine zweite Codierung der Magnetcodierung (22) bildet.

## Claims

1. A security element (12) for securing security papers, value documents and other data carriers, having a magnet code (22) composed of a plurality of magnet regions (24) that are arranged spaced apart along a longitudinal direction (L), the sequence of magnet regions (24) and gaps (26) lying between the magnet regions forming a first code (30) of the magnet code, **characterized in that** the magnet regions (24) are formed by a magnetic material applied in even thickness (d), but the magnet regions (24) have different quantities of magnetic material in a transverse direction (Q) that is perpendicular to the longitudinal direction, the sequence of magnet regions of different material quantities (24-H, 24-M, 24-L) forming a second code of the magnet code (22).

2. The security element according to claim 1, **characterized in that** the magnet regions (24) have material quantities of three, four or five different sizes in the transverse direction (Q).

3. The security element according to claim 1 or 2, **characterized in that** the magnet regions (24) have different dimensions in the transverse direction (Q).

4. The security element according to at least one of claims 1 to 3, **characterized in that** the magnet regions (24) have screenings of different intensities in the transverse direction (Q).

5. The security element according to at least one of claims 1 to 4, **characterized in that,** in the longitudinal direction (L), the dimensions of the magnet regions (24) and the dimensions of the gaps (26) lying between the magnet regions in the longitudinal direction are always an integer multiple of a basic length ℓ.

6. The security element according to at least one of claims 1 to 5, **characterized in that** the magnet regions (24) are formed by magnetic material having different magnetic properties, the sequence of magnet regions (24) of different magnet properties forming a third code of the magnet code (22).

7. The security element according to claim 6, **characterized in that** the magnet regions (24) are formed by magnetic material having different coercitive field strengths.

8. The security element according to at least one of claims 1 to 7, **characterized in that,** in the transverse direction (Q), the magnet regions (24) of maximum dimension take up the entire width of the security element (12), especially of a security thread.

9. The security element according to at least one of claims 1 to 8, **characterized in that,** in the longitudinal direction (L), the dimension of the magnet regions (24) is between 1 mm and 6 mm and/or, in the transverse direction (Q), the dimension of the magnet regions (24) is between 1 mm and 6 mm or the width of the security element.

10. The security element according to at least one of claims 1 to 9, **characterized in that** the security element (12) is a security thread, a security band or a security strip.

11. A method for manufacturing a security element (12) having a magnet code (22), in which, on a carrier (20),
- magnetic material is applied in even thickness (d) along a longitudinal direction (L) to develop a plurality of magnet regions (24) spaced apart along a longitudinal direction (L), the sequence of magnet regions (24) and gaps (26) lying between the magnet regions forming a first code (30) of the magnet code (22),
**characterized in that**
- the magnet regions (24) are applied having different quantities of magnetic material in a transverse direction (Q) that is perpendicular to the longitudinal direction, the sequence of magnet regions of different material quantity (24-H, 24-M, 24-L) forming a second code of the magnet code (22).

## Revendications

1. Élément de sécurité (12), destiné à sécuriser des papiers de sécurité, des documents de valeur et autres supports de données, pourvu d'un codage magnétique (22) constitué d'une pluralité de zones magnétiques (24), qui sont placées en étant écartées le long d'une direction longitudinale (L), les séquences de zones magnétiques (24) et d'espaces intermédiaires (26) situés entre les zones magnétiques formant un premier codage (30) du codage magnétique, **caractérisé en ce que** les zones magnétiques (24) sont formées d'une matière magnétique appliquée sur une même épaisseur (d), mais dans une direction transversale (Q) perpendiculaire à la direction longitudinale, les zones magnétiques (24) présentent différentes quantités de matière magnétique, la séquence de zones magnétiques de différente quantité de matière (24-H, 24-M, 24-L) formant un deuxième codage do codage magnétique (22).

2. Élément de sécurité selon la revendication 1, **caractérisé en ce que** les zones magnétiques (24) présentent dans la direction transversale (Q) trois, quatre ou cinq quantités de matière de différente taille.

3. Élément de sécurité selon la revendication 1 ou 2, **caractérisé en ce que** les zones magnétiques (24) présentent une dimension différente dans la direction transversale (Q).

4. Élément de sécurité selon au moins l'une quelconque des revendications 1 à 3, **caractérisé en ce que** les zones magnétiques (24) présentent dans la direction transversale (Q) un tramage de différente épaisseur.

5. Élément de sécurité selon au moins l'une quelconque des revendications 1 à 4, **caractérisé en ce que** les dimensions des zones magnétiques (24) dans la direction longitudinale (L) et les dimensions des espaces intermédiaires (26) situés entre les zones magnétiques dans la direction longitudinale s'élèvent toujours à un multiple entier d'une longueur de base ℓ.

6. Élément de sécurité selon au moins l'une quelconque des revendications 1 à 5, **caractérisé en ce que** les zones magnétiques (24) sont formées de matière magnétique présentant différentes propriétés magnétiques, la séquence de zones magnétiques (24) de différentes propriétés magnétiques formant un troisième codage du codage magnétique (22).

7. Élément de sécurité selon la revendication 6, **caractérisé en ce que** les zones magnétiques (24) sont formées de matière magnétique de différente force coercitive.

8. Élément de sécurité selon au moins l'une quelconque des revendications 1 à 7, **caractérisé en ce que** les zones magnétiques (24) de dimension maximale dans la direction transversale (Q) occupent toute la largeur de l'élément de sécurité (12), notamment d'un fil de sécurité.

9. Élément de sécurité selon au moins l'une quelconque des revendications 1 à 8, **caractérisé en ce que** la dimension des zones magnétiques (24) dans la direction longitudinale (L) se situe entre 1 mm et 6 mm, et / ou la dimension des zones magnétiques (24) dans la direction transversale (Q) se situe entre 1 mm et 6 mm ou la largeur de l'élément de sécurité.

10. Élément de sécurité selon au moins l'une quelconque des revendications 1 à 9, **caractérisé en ce que** l'élément de sécurité (12) est un fil de sécurité, une bande de sécurité ou un ruban de sécurité.

11. Procédé, destiné à fabriquer un élément de sécurité (12) pourvu d'un codage magnétique (22), lors duquel, sur un support (20)
- le long d'une direction longitudinale (L), on applique sur une même épaisseur (d) de la matière magnétique, pour créer une pluralité de zones magnétiques (24) écartées le long d'une direction longitudinale (L), la séquence de zones magnétiques (24) et d'espaces intermédiaires (26) situés entre les zones magnétiques formant un premier codage (30) du codage magnétique (22),
**caractérisé en ce que**
- dans une direction transversale (Q) perpendiculaire à la direction longitudinale, on applique les zones magnétiques (24) dans différentes quantités de matière magnétique, la séquence de zones magnétiques de différente quantité de matière (24-H, 24-M, 24-L) formant un deuxième codage du codage magnétique (22).
